# FASCICULE DE BREVET EUROPEEN

(11) **EP 3 449 410 B1**
(45) Date de publication et mention de la délivrance du brevet: **17.11.2021**
(21) Numéro de dépôt: 17730925.9
(22) Date de dépôt: 25.04.2017
(51) Int. Cl.: G06F 21/32, G06F 21/60, G06F 21/62, H04L 29/06, G06F 21/34

(54) **SYSTÈME D'AUTHENTIFICATION BIOMÉTRIQUE BASÉ SUR LES RÉSEAUX VEINEUX ET DES CODAGES UNIQUES ET NON FALSIFIABLES DE STRUCTURES ARBORESCENTES ET PROCÉDÉ ASSOCIÉ**
BIOMETRISCHES AUTHENTIFIZIERSYSTEM BASIEREND AUF VENENMUSTER UND EINZIGARTIGEN UND UNVERFÄLSCHBAREN KODIERUNGEN VON BAUMSTRUKTUREN UND ASSOZIIERTES VERFAHREN
BIOMETRIC AUTHENTICATION SYSTEM BASED ON VEIN PATTERNS AND UNIQUE AND UNADULTERABLE CODINGS OF TREE STRUCTURES AND ASSOCIATED METHOD

(30) Priorité: 27.04.2016 CH 5552016
(43) Date de publication de la demande: 06.03.2019
(73) Titulaire: VTIP Sàrl, 3966 Chalais (CH)
(72) Inventeur: BRON, Christophe, CH- 3966 Chalais (CH)
(74) Mandataire: Derrien, Murielle
(86) Numéro de dépôt international: PCT/IB2017/052362
(87) Numéro de publication internationale: WO 2017/187332

(56) Documents cités:
- CH-A2- 705 412
- FR-A1- 2 988 196
- JP-A- 2011 203 822
- US-A1- 2011 002 461
- US-A1- 2012 033 807
- US-A1- 2013 219 193

## Description

### DOMAINE TECHNIQUE DE L'INVENTION

L'invention se rapporte au domaine de l'authentification biométrique basé sur les réseaux veineux. Plus particulièrement, l'invention concerne un système d'authentification biométrique basé sur les réseaux veineux et des codages uniques et non falsifiables de structures arborescentes. L'invention concerne encore le procédé mis en œuvre dans le système d'authentification ainsi que l'utilisation du système.

### ETAT DE LA TECHNIQUE ANTERIEURE

Classiquement, les systèmes biométriques sont étroitement liés à une personne car ils peuvent utiliser un trait unique propre à chacun à des fins d'identification ou d'authentification. Si les données biométriques d'une personne peuvent être supprimées ou modifiées, ce n'est pas le cas de la source dont elles proviennent.

À l'heure actuelle, l'état de l'art technologique repose sur une capture sans contact du réseau veineux par un détecteur lorsque la main ou une autre partie du corps d'un utilisateur est éclairée par une lumière en proche infrarouge. L'image acquise est traitée par un dispositif, client, pour décrire les caractéristiques du réseau veineux, ce qui donne une image post-traitée du réseau vasculaire spécifique à chaque individu (gabarit). Le gabarit est enregistré une première fois sur un serveur en identification et est comparé au gabarit généré au moment où l'utilisateur s'authentifie. Cependant, comme le gabarit est une information permettant d'identifier l'individu, il est nécessaire de gérer strictement le gabarit comme un renseignement personnel, ce qui nécessite un coût de gestion élevé. Même si l'information est strictement gérée, de nombreux utilisateurs sont encore réticents à enregistrer un gabarit pour des raisons de vie privée. En outre, le nombre d'échantillons d'un type d'information biologique possédée par un individu est limité. Par exemple, le nombre de doigts à partir de laquelle les empreintes digitales peuvent être collectées est seulement de dix pour une personne. Ainsi, il n'est pas facile de changer fréquemment de gabarit contrairement aux mots de passe et aux clés de chiffrement. Si un gabarit est divulgué, il existe un risque que le gabarit puisse être reproduit, l'authentification biométrique ne peut alors plus être utilisée. En outre, lorsque la même information biométrique est enregistrée sur un autre système, ledit système est également confronté à une menace.

Ainsi il a été proposé l'authentification biométrique qui enregistre et vérifie la correspondance de la quantité caractéristique de l'information biométrique protégée par un cryptage approprié. Plus précisément, au moment de l'enregistrement, le gabarit (la quantité de caractéristiques à enregistrer) est soumis à une conversion (correspondant au chiffrement) à l'aide d'un paramètre de conversion secret (correspondant à une clé de chiffrement). Le modèle converti est enregistré dans la base du serveur. Dans le même temps, le paramètre de conversion est mémorisé dans une carte à puce et est délivré à l'utilisateur. Au moment de l'authentification, l'utilisateur saisit les informations biométriques, au niveau du terminal d'authentification (client), ainsi que le paramètre de conversion. Le terminal extrait la quantité caractéristique de l'information biométrique de l'utilisateur et la convertit, puis la transmet au serveur. Le serveur compare le modèle converti stocké dans la base de données avec la quantité de caractéristiques convertie reçue du client. Si les deux ensembles de données sont suffisamment proches les uns des autres, le serveur détermine une acceptation, autrement il prononce un rejet. Le paramètre de conversion peut être généré à partir d'une information secrète telle qu'un mot de passe mémorisé par l'utilisateur. Une telle méthode d'authentification est appelée authentification biométrique résiliable.

L'avantage de cette méthode est que l'utilisateur détient secrètement le paramètre de conversion, le serveur ne peut pas connaître la quantité de caractéristiques d'origine, même dans l'authentification. Ainsi, la vie privée de l'utilisateur est protégée. En outre, même si le modèle a fuité, il est possible d'assurer la sécurité en modifiant le paramètre de conversion pour régénérer un modèle, et en enregistrant à nouveau le modèle généré. Lorsque la même information biométrique est utilisée dans d'autres systèmes, le modèle est converti par des paramètres différents pour enregistrer des modèles différents dans les systèmes respectifs. Avec cette configuration, si un modèle est divulgué à partir d'un des systèmes, la sécurité des autres systèmes ne peut pas être affaiblie.

Dans l'authentification biométrique résiliable décrite ci-dessus, il est nécessaire pour un utilisateur de gérer en toute sécurité le paramètre de conversion. Ainsi, l'utilisateur doit disposer d'une carte à puce pour stocker le paramètre de conversion, ou mémoriser des informations secrètes pour générer le paramètre de conversion. Il en résulte une dégradation de la disponibilité inhérente de l'authentification biométrique, le paramètre de conversion pouvant être perdu ou oublié. Par ailleurs, le paramètre de conversion peut être stocké dans le dispositif client. Cependant, en général, il est difficile d'assurer la sécurité du client. Ainsi, des coûts supplémentaires sont nécessaires pour fournir des mécanismes de protection, tels que la résistance au sabotage, ou pour empêcher les fuites. En outre, lorsqu'un nombre indéterminé d'utilisateurs partagent une pluralité de terminaux tels que les guichets automatiques bancaires et des kiosques de terminaux, il est nécessaire de gérer les paramètres de conversion de tous les utilisateurs de chaque terminal. Ce ne serait pas réaliste en termes de sécurité et de coûts opérationnels.

CH 705 412 A2 divulgue l'utilisation d'un code CAB (Code Anonyme Biométrique) résiliable dérivé d'empreintes vasculaires à des fins de référencement de données et de marquage anonyme d'informations.

US 2013/219193 A1 divulgue l'utilisation d'un code dérivé d'empreintes biométriques à des fins de référencement de données et mentionne le besoin d'introduire une certaine tolérance dans la comparaison du code dérivé.

US 2011 /002461 A1, FR 2 988 196 A1 et US 2012/033807 A1 divulguent une authentification biométrique résiliable.

Il est souhaitable de fournir un système hautement disponible d'authentification biométrique résiliable ne nécessitant pas la possession ou la mémorisation d'informations confidentielles des utilisateurs tout en assurant la sécurité.

Le but est de ne pas conserver le gabarit et les images du réseau vasculaire tout en ayant un système infalsifiable.

### EXPOSE DE L'INVENTION

L'invention propose un système et un procédé d'authentification biométrique résiliable non nominatif tels que définis dans les revendications jointes.

L'invention vise à remédier aux inconvénients de l'état de la technique et notamment à proposer un système d'authentification biométrique résiliable non nominatif basé sur des réseaux veineux, comprenant une source de lumière (de préférence mais non exclusivement infrarouge), pour éclairer une partie du corps d'un utilisateur, et un dispositif de détection, comprenant un capteur pour capturer sans contact un réseau veineux de ladite partie du corps de l'utilisateur éclairée par ladite lumière, une unité d'extraction des caractéristiques biométriques ci-après nommées gabarit, et une unité de conversion des gabarits biométriques. Le dispositif de détection disposant d'un identifiant unique, ladite unité d'extraction de caractéristiques biométriques extrayant une quantité de caractéristiques à partir des informations biométriques obtenues par le capteur et générant une empreinte vasculaire. Le système est caractérisé en ce que l'unité de conversion des caractéristiques étant apte à convertir ladite empreinte vasculaire, via un algorithme de codage, combinant l'identifiant du dispositif avec les caractéristiques extraites, en un identifiant numérique variable, de sorte que ledit identifiant numérique n'est pas lié à ladite empreinte vasculaire de l'utilisateur et est généré sans aucune information d'identification dudit utilisateur et en ce que ledit identifiant numérique généré étant spécifique audit dispositif de détection de données.

Selon des caractéristiques particulières, le système d'authentification biométrique comprend en outre un premier serveur étant apte à recevoir et à transmettre un identifiant numérique généré par le dispositif de détection, ledit premier serveur comprend une unité de génération de données apte à générer des codes en utilisant un lieu, une date et des informations anonymes ou un paramètre logistique ou médical transmis par le dispositif de détection, et en ce que ledit premier serveur ne contienne aucune identité de l'utilisateur.

Selon des caractéristiques particulières, le dispositif de détection comprend également un code supplémentaire appartenant à une personne qui détient ledit dispositif de détection. Ainsi, l'unité de conversion de code du deuxième serveur est apte à analyser ledit code supplémentaire reçu pour déterminer la présence dudit code dans la base de données.

Selon des caractéristiques particulières, les codes générés par l'unité de génération de données du premier serveur sont inclus dans un service de messagerie multimédia (MMS) sous la forme d'une étiquette associée à des données utiles, après un encodage cryptographique final, ledit MMS est sauvegardé sur un téléphone portable ou sur un ordinateur ou Tablette, ledit ordinateur ou Tablette étant branché au dispositif de détection, et en ce que ledit MMS est transmis, suivant un protocole standard, vers un récepteur du second serveur.

Le système d'authentification comprend un deuxième serveur, le premier serveur et le second serveur sont connectés via un réseau sécurisé, ledit deuxième serveur comprenant une base de données de codes, une unité de conversion de codes, et une unité de détermination de correspondance. L'unité de conversion de code est apte à convertir le code transmis à partir du premier serveur, afin d'extraire et de générer un code unique. La base de données de code est capable de stocker les codes convertis suivant les paramètres, et en ce que l'unité de détermination de correspondance est apte à comparer les codes générés par l'unité de réception de code avec les codes contenus dans la base de données afin de déterminer une adéquation ou non.

Selon des caractéristiques particulières, le second serveur comprend une unité d'extraction des codes apte à décrypter le message, via un algorithme de décryptage, puis extraire ladite étiquette de sorte à définir le lieu, la date, le dispositif de détection et la personne qui détient le dispositif, ainsi que les données utiles du message, ladite étiquette étant traitée via l'unité de correspondance de sorte à pouvoir insérer les données utiles du message en une base de données, l'utilisateur pouvant accéder auxdites données via un portail internet sécurisé.

Selon des caractéristiques particulières, le second serveur est apte à envoyer une nouvelle information de codage, avec un algorithme différent, audit dispositif de détection pour refaire la dernière saisie, au cas où le code extrait est inconnu mais présente des similitudes et des différences importantes avec un code existant dans la base de données, et en ce que ledit second serveur comprend en outre une unité de génération de paramètre apte à générer un paramètre spécifique unique utilisé pour reconvertir ladite étiquette en un code reconverti, en ce que l'unité de réception de code dudit serveur est apte à générer un gabarit spécifique unique correspondant audit code reconverti, et en ce que l'unité de détermination de correspondances compare ledit gabarit spécifique unique avec les codes contenus dans la base de donnée afin de déterminer une adéquation ou non.

Selon des caractéristiques particulières, le dispositif de détection comprend également un code supplémentaire appartenant à une personne qui détient ledit dispositif de détection. Ainsi, l'unité de réception de code du second serveur est apte à analyser ledit code supplémentaire reçu pour déterminer la présence dudit code dans la base de données.

Selon des caractéristiques particulières, les codes générés par l'unité de génération de données du premier serveur sont inclus dans un service de messagerie multimédia (MMS) sous la forme d'une étiquette associée à des données utiles, après un encodage cryptographique final, ledit MMS est sauvegardé sur un téléphone portable ou sur un ordinateur ou Tablette, ledit ordinateur ou Tablette étant branché au dispositif de détection, et en ce que ledit MMS est transmis, suivant un protocole standard, vers un récepteur du second serveur.

Selon des caractéristiques particulières, le second serveur comprend une unité d'extraction des codes apte à décrypter le message, via un algorithme de décryptage, puis extraire ladite étiquette de sorte à définir le lieu, la date, le dispositif de détection et la personne qui détient le dispositif, ainsi que les données utiles du message, ladite étiquette étant traitée via l'unité de correspondance de sorte à pouvoir insérer les données utiles du message en une base de données, l'utilisateur pouvant accéder auxdites données via un portail internet sécurisé.

Selon des caractéristiques particulières, le système d'authentification est caractérisé en ce qu'il est apte à gérer de manière sécurisée une transmission bidirectionnelle de données anonymisées de sorte à gérer de manière sécurisé l'échange de données médicales ou autres données sensibles.

Il est également divulgué à titre comparatif un procédé d'authentification biométrique résiliable non nominatif basé sur des réseaux veineux mis en œuvre dans le système ci-dessus comprenant les étapes suivantes :
E1) éclairage d'une partie du corps d'un utilisateur par une lumière de préférence proche infrarouge ;
E2) saisie d'une première zone de la partie éclairée au moyen d'un détecteur ;
E3) extraction d'une image obtenue de ladite première zone ;
E4) normalisation de ladite image selon une norme prédéfinie et traitement de ladite image normalisée afin d'en extraire des empreintes vasculaires ;
E5) segmentation de ladite image normalisée et l'extraction d'une arborescence puis recherche d'un segment le plus long à caractériser ;
E6) caractérisation mathématiques des nœuds dudit segment ;
E7) caractérisation matricielle desdits nœuds suivi d'un codage initial ;
E8) application d'un algorithme de la matrice de séquence et codage matriciel de la séquence ;
E9) extraction d'un résultat en alphanumérique dudit codage matriciel et le mixage des résultats selon l'algorithme ;
E10) application de l'algorithme de Luhn sur ledit résultat alphanumérique ;
E11) codage de l'application : codage du lecteur et/ou codage de la version et d'un numéro d'algorithme et/ou codage de la date ;
E12) encodage cryptographique final et intégration du résultat dans un service de messagerie multimédia (MMS) ;
E13) sauvegarde et transmission du MMS selon le protocole standard de transmission vers un récepteur intégré au second serveur ;
E14) réception et décodage du MMS avec extraction du code et suppression des métadonnées non utiles dans le message ;
E15) application de l'algorithme de comparaison matricielle ;
E16) insertion dudit code obtenu dans une base de données de modèle inclus dans un deuxième serveur ;
E17) envoi éventuel d'une nouvelle information de codage au dispositif de détection.

L'invention concerne en outre l'itération des étapes E1 à E9 du procédé d'authentification biométrique ci-dessus, sur une autre partie du corps, puis le codage par fusion selon un algorithme de fusion des deux codes résultants de chaque partie du corps, résultant en un résultat alphanumérique dudit codage matriciel.

L'invention concerne en outre l'itération des étapes E1 à E9 du procédé d'authentification biométrique ci-dessus, sur une autre personne présent lors d'une action, puis le codage par concaténation ou fusion selon un algorithme de fusion des deux codes résultants des parties du corps de chaque personne, résultant en un résultat alphanumérique dudit codage matriciel tel que le résultat contient les codes uniques de deux personnes distinctes mais concernées par la même action.

L'invention concerne également l'utilisation du système ci-dessus en tant que système de codage qui peut marquer de manière anonyme l'échange d'informations par SMS ou MMS ou email à partir d'informations biométriques.

L'invention concerne également l'utilisation du système d'authentification ci-dessus pour échanger des informations anonymes entre un patient, un fournisseur de santé, un centre de contact, ou un autre emplacement contenant du personnel médical et des applications de cybersanté et de base de données.

L'invention concerne également l'utilisation du système d'authentification biométrique ci-dessus dans des systèmes de communication et notamment l'authentification des informations anonymes contenues dans des messages tels que ceux utilisés dans les systèmes de communications digitaux.

L'invention concerne encore l'utilisation du système d'authentification biométrique ci-dessus dans des systèmes de communication et notamment l'authentification des informations anonymes contenues dans des messages au moyen de deux ou plusieurs codes différents issus de la même saisie mais destinés à transmettre des informations anonymes différentes ou éventuellement similaires à des serveurs différents.

### BREVE DESCRIPTION DES FIGURES

D'autres caractéristiques, détails et avantages de l'invention ressortiront à la lecture de la description qui suit, en référence aux figures annexées, qui illustrent :
- la figure 1 illustre le système d'authentification biométrique selon la présente invention;
- la figure 2 illustre un organigramme présentant les différentes étapes du procédé selon l'invention ;
- la figure 3 illustre un organigramme présentant les différents étapes du procédé dans le cas de l'itération des étapes du procédé sur une autre partie du corps ou sur une autre personne.

Pour plus de clarté, les éléments identiques ou similaires sont repérés par des signes de référence identiques sur l'ensemble des figures.

### DESCRIPTION DETAILLEE D'UN MODE DE REALISATION

Selon un aspect de la présente invention, on fournit un système biométrique, dans lequel un dispositif de détection, fonctionnant en tant que client d'un premier serveur, encode les paramètres biométriques et transmet au premier serveur le résultat dudit codage, celui-ci combinant les paramètres biométriques extraits avec un identifiant unique sans aucune information d'identification d'un utilisateur. Le premier serveur transmet alors à un second serveur appelé serveur de réception, le résultat d'un codage combinant de multiples paramètres, les deux serveurs étant couplés par l'intermédiaire d'un réseau de préférence sécurisé.

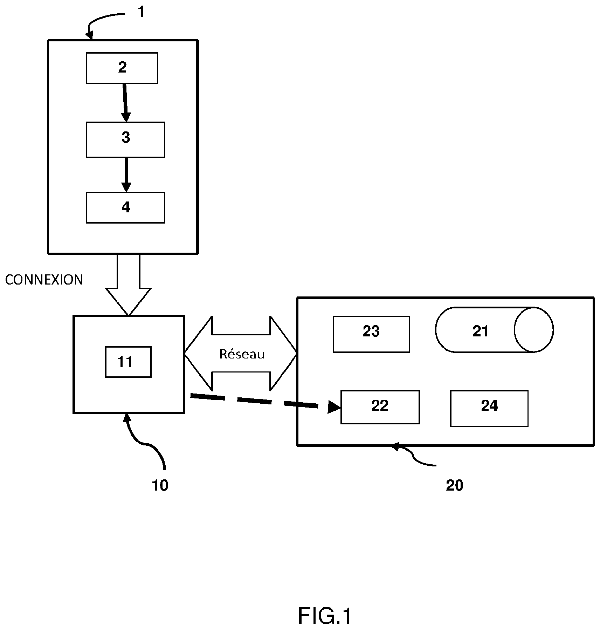

Selon la représentation de la figure 1, le système comprend une source de lumière infrarouge afin d'éclairer une partie du corps d'un utilisateur, la partie du corps pouvant être une main, tout ou partie du visage d'une personne, la rétine, ou n'importe quelle autre partie du corps. La lumière infrarouge est d'une longueur d'onde entre 760 et 940 nm. Le système comprend aussi un dispositif de détection 1. Ce dispositif est composé d'un capteur 2, pour capturer un réseau veineux de la partie éclairé par la lumière et ainsi obtenir des informations biométriques, et de plusieurs unités. Tout d'abord, une unité d'extraction de caractéristiques biométriques 3, dont le rôle est d'extraire une quantité de caractéristiques (gabarit) à partir des informations biométriques obtenues par le capteur 2 et de générer ainsi une empreinte vasculaire. Le dispositif 1 comprend en outre une unité de conversion de caractéristiques biométriques 4 afin de convertir l'empreinte vasculaire en un identifiant numérique. Pour convertir l'empreinte vasculaire en un identifiant numérique variable, l'unité de conversion 4 utilise un algorithme de codage qui combine le numéro de série du dispositif 1 avec la quantité de caractéristiques extraite. Ce numéro de série sera considéré comme un paramètre interne au dispositif 1 et permet, par la suite, d'associer une empreinte au dispositif de détection 1 en ayant effectué l'acquisition.

Pour pouvoir appliquer un algorithme de codage, l'empreinte vasculaire d'une zone saisie, qui est sous la forme d'une ou plusieurs images de la même zone de la même personne, a été segmentée, une arborescence en a été extraite, et un segment (généralement le plus grand segment mais pas exclusivement) de ladite arborescence a été choisi. Ensuite, il a été procédé à une caractérisation matricielle des nœuds dudit segment. Le codage initial est effectué par l'application d'un algorithme de la matrice de séquence, ainsi, il a été procédé à une extraction du résultat du codage alphanumérique. On applique alors la formule de Luhn (ou algorithme de Luhn) pour valider le résultat.

L'identifiant numérique résultant de l'unité de conversion 4 du dispositif de détection 1 est considéré comme variable car il n'est pas lié à l'empreinte vasculaire elle-même. En effet, la même opération réalisée avec un autre dispositif de détection, ayant par conséquent un numéro de série différent, n'aura pas le même résultat. Par ailleurs, il est aussi important de noter que l'identifiant numérique résultant ne comprend pas une quelconque identification d'un utilisateur, en effet, le premier serveur 10 et le dispositif de détection 1 ne nécessitent pas la saisie d'un identifiant d'un utilisateur. Le dispositif 1 transmet ensuite cet identifiant numérique variable vers le premier serveur 10, ledit dispositif 1 et ledit premier serveur 10 fonctionnant selon un environnement client/serveur.

Le premier serveur 10 comprend aussi une unité de génération de données 11. L'unité de génération de données 11 génère des données en utilisant un lieu, une date, et des informations logistiques ou médicales anonymes transmises par le dispositif de détection 1. On procède ensuite à un encodage final des paramètres ci-dessus et de l'identifiant numérique. Ledit encodage est une suite alphanumérique sous la forme d'une étiquette. Ladite suite alphanumérique est le résultat final de tous les codes cryptés et concaténés ensembles.

Le second serveur 20 comprend une base de données de codes transmis 21, une unité de réception de code 22 transmis en codes définitifs, et une unité de détermination de correspondance 23. La base de données de codes transmis 21 stocke les codes transmis. L'unité de réception de code convertit le code correspondant au code transmis à partir du premier serveur 10, afin d'extraire et de générer le code unique dit définitif correspondant à chaque zone saisie. La base de données des codes définitifs stocke les codes convertis suivant les paramètres du lecteur et recode la quantité de caractéristiques de l'information biométrique selon un code définitif pour chaque zone saisie. L'unité de détermination de correspondance 23 compare le code définitif, avec les codes présents dans la base de données 21 afin de déterminer une correspondance, ou non.

Le dispositif de détection 1 comprend également le code résultant de la personne qui détient actuellement le dispositif de détection en tant que paramètre supplémentaire. L'unité de réception de code du second serveur 20 compare le code reçu avec plusieurs codes utilisateur pour déterminer si il est déjà présent dans la base de données, ou non. Cet aspect est particulièrement adapté pour la transmission anonyme de l'information médicale et l'enregistrement en base de données des dossiers de santé électroniques.

Par ailleurs, les codes générés par l'unité de génération de données 11 du premier serveur 10 peuvent être inclus dans un service de messagerie multimédia (MMS) sous la forme d'une étiquette associée à des données utiles d'un message, après un encodage cryptographique final. Ledit MMS peut être sauvegardé sur un téléphone portable, sur un ordinateur, ou sur une tablette. Ledit ordinateur ou tablette est branché au dispositif de détection1. Le MMS est transmis, suivant un protocole standard, vers l'unité de réception 22 du second serveur 20. Les codes reçus dans le récepteur 22 sont décryptés, via un algorithme de décryptage, puis extraits par une unité d'extraction 24 du second serveur 20. L'extraction de l'étiquette définit le lieu, la date, le dispositif de détection 1 et la personne qui détient le dispositif, ainsi que les données utiles du message. L'étiquette sera traitée via l'unité de correspondance 23, et les données utiles du message sont ensuite insérées dans une base de données. L'utilisateur peut accéder aux données utiles du message via un portail internet sécurisé.

Selon encore un autre aspect de la présente invention, le second serveur 20 peut envoyer une nouvelle information de codage, avec un algorithme différent, audit dispositif de détection 1 en lui demandant de refaire la dernière saisie de gabarit biométrique, au cas où le code extrait est inconnu mais présente des similitudes et des différences importantes avec un code existant dans la base de données. De plus, le second serveur 20 comprend aussi une unité de génération de paramètre 26 (non représenté sur la figure 1), générant ainsi un paramètre spécifique unique utilisé pour reconvertir l'étiquette en un code reconverti. Dans ce cas, l'unité de réception de code 22 dudit serveur 20 génère un code spécifique unique correspondant au code reconverti et l'unité de détermination de correspondances 23 compare ledit code spécifique unique avec les codes contenus dans la base de données 21 pour pouvoir déterminer une adéquation ou non.

De cette manière le système de la présente demande est capable de gérer de manière sécurisée une transmission bidirectionnelle de données anonymisées, et ainsi gérer l'échange de données médicales ou d'autres données sensibles. Par conséquent, il n'est pas nécessaire de gérer tous les paramètres du côté de l'utilisateur dans le système. Ainsi, l'utilisateur n'a pas besoin de posséder un jeton ou de mémoriser des informations secrètes, comme un mot de passe. Par conséquent, une authentification biométrique hautement disponible et résiliable peut être obtenue avec le système décrit ci-dessus.

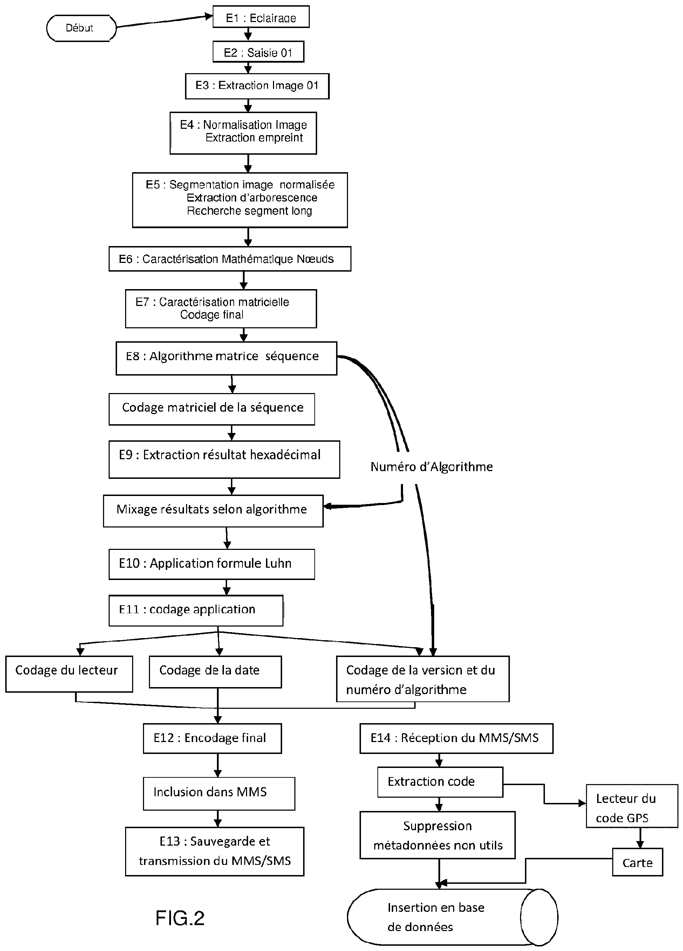

Il est décrit à titre comparatif un procédé d'authentification biométrique résiliable non nominatif basé sur des réseaux veineux mis en œuvre dans le système ci-dessus. La figure 2 représente les différentes étapes du procédé selon l'invention. La première étape consiste à éclairage d'une partie du corps d'un utilisateur par une lumière proche infrarouge d'une longueur d'onde comprise entre 760 et 940 nm et la saisie au moyen d'un détecteur d'une première zone de la partie éclairée. L'étape suivante consiste en l'extraction d'une image obtenue de la première zone, ladite image sera normalisée selon une norme prédéfinie et ensuite sera traitée afin d'extraire des empreintes vasculaires. L'image normalisée sera segmentée et une arborescence est extraite. Dans la présente invention, à l'étape suivante, on recherche un segment plus long et ensuite on procède à une caractérisation des nœuds dudit segment, puis à une caractérisation matricielle desdits nœuds suivi d'un codage initial. L'étape suivante consiste à l'application d'un algorithme de la matrice de séquence, puis un codage matriciel de la séquence et enfin l'extraction d'un résultat alphanumérique.

Selon le type d'empreinte biométrique désiré, il est possible d'effectuer les étapes ci-dessus sur une autre partie du corps d'une même personne, puis le codage par concaténation ou fusion selon un algorithme de fusion des deux codes résultants de chaque partie du corps, résultant en un résultat alphanumérique du codage matriciel. De même, il est possible d'effectuer les étapes ci-dessus sur une autre personne présente lors d'une même action, puis de procéder à l'application d'un algorithme de fusion des deux codes résultants des parties du corps de chaque personne, résultant en un résultat alphanumérique du codage matriciel. Dans ce cas le résultat contient les codes uniques de deux personnes distinctes mais concernées par la même action.

Le procédé comporte en outre les étapes suivantes: l'application de l'algorithme de Luhn, ou bien l'application de la formule de Luhn, sur le résultat alphanumérique puis, un codage du lecteur et/ou codage de la version et d'un numéro d'algorithme et/ou codage de la date. Ensuite, on procède à l'encodage cryptographique final puis on intègre le résultat dans un service de messagerie multimédia (MMS). Le MMS sera sauvegardé et transmis selon le protocole standard de transmission vers un récepteur intégré à un serveur de réception (second serveur). L'étape suivante consiste au décodage du MMS avec l'extraction du code et la suppression des métadonnées non utiles dans le message puis à l'application de l'algorithme de comparaison matricielle. Suivant le résultat de la comparaison, ledit code obtenu sera ensuite inséré dans une base de données de codes définitifs du second serveur. Dans le cas où le code obtenu présente des similitudes et des différences importantes avec un code existant dans la base de données de codes, le serveur peut éventuellement envoyer une nouvelle information de codage au dispositif de détection afin d'effectuer une nouvelle saisie.

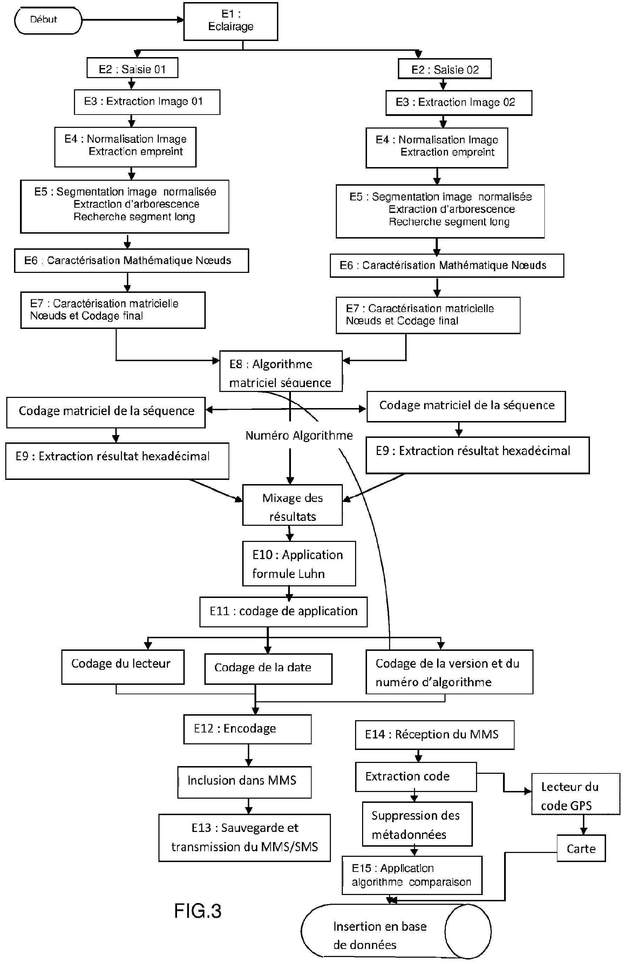

Figure 3 représente le diagramme de l'authentification biométrique d'une autre partie du corps d'un même utilisateur ou bien l'authentification biométrique d'une autre personne participant à une action commune avec l'utilisateur, par exemple, un prestataire de santé.

Par conséquent, cet exemple comparatif fournit un procédé pour utiliser des codes générés par la biométrie, de manière résiliable, non définitive et anonyme. De plus, le procédé, tel que décrit ci-dessus dans ces différentes étapes, permet de réduire le format des quantités de caractéristiques biométriques à certains codes spécifiques fournis par les algorithmes.

Considérant que «informations sensibles» se réfère à l'information qui peut être extraite ou autrement obtenue en analysant le signal transmis entre le client et le serveur, l'extraction des informations de marquage et / ou une combinaison de signaux, la présente invention fournit un procédé de marquage des informations sensibles de manière anonyme. Le procédé mis en œuvre dans le système selon la présente invention permet un transfert des "informations sensibles" sans aucune référence à une origine identifiable. La présente invention propose un procédé de transfert des "informations sensibles" encodées selon un code spécifique résultant de l'extraction des caractéristiques biométriques.

L'invention concerne encore l'utilisation du système selon la présente invention en tant que système de codage qui peut marquer de manière anonyme l'échange d'informations par SMS ou MMS ou e-mail à partir d'informations biométriques.

L'invention concerne encore l'utilisation du système selon la présente invention dans des systèmes de communication et notamment l'authentification des informations anonymes contenues dans des messages tels que ceux utilisés dans les systèmes de communications digitaux.

L'invention concerne encore et particulièrement l'utilisation du système d'authentification selon la présente invention pour échanger des informations anonymes entre un patient, un fournisseur de santé, un centre de contact, ou un autre emplacement contenant du personnel médical et des applications de cybersanté et de base de données.

Dans les applications médicales, le message doit être conservé de manière anonyme, mais contient ce qu'on appelle « des données utiles » concernant des informations ou des actions effectuées par le fournisseur de soins de santé. Par exemple, les messages peuvent comprendre de simples rapports d'état du capteur et des commandes d'un fournisseur de santé. La bande passante de transmission de données étant limité, l'utilisation du système selon l'invention trouve particulièrement son intérêt. En effet, le système permet d'authentifier le message avec des empreintes biométriques anonymes et résiliables sans pour autant alourdir le message avec une quantité importante de données.

À titre d'exemple comparatif, le
code des caractéristiques biométriques est généré à l'aide d'un algorithme unidirectionnel qui produit un code alphanumérique. Le code est ensuite crypté et envoyé à un récepteur qui intégrera les informations reçues dans le cadre d'une étiquette anonyme et unique pour l'échange de données. Ce code est appelé BAK (Biometric Anonyme Keycode) ou clef de codage anonyme biométrique. Des algorithmes similaires, mais avec des résultats de codage différents peuvent être utilisés dans le système de dispositif de détection. La même quantité de caractéristiques biométriques (ou gabarits biométriques) peut être convertie par différents algorithmes et paramètres pour enregistrer des codes différents dans les systèmes respectifs. Avec cette configuration, si un modèle est divulgué à partir d'un des systèmes, la sécurité des autres systèmes ne peut pas être affaiblie.

Chaque BAK est unique par le fait que le code résultant est rarement rigoureusement identique entre deux séries de collecte de données à partir de la même personne, effectuées par le même détecteur, et codées par le même algorithme, mais contient une similitude et une reproductibilité suffisante pour permettre une comparaison entre deux BAKS générés dans des conditions similaires. La comparaison permet l'exclusion de faux rejets, mais aussi de fausses acceptations basées sur le degré de similitude de la quantité de caractéristiques biométriques entre deux zones de codage biométriques individuelles.

Il est possible de considérer que le code BAK est similaire à un code génétique dont les séquences sont semblables sans être identiques entre deux personnes. Chaque BAK est unique et sécurisé par une formule de Luhn ou toute autre méthode cryptographique pour empêcher les tentatives de manipulation. Une comparaison entre deux BAK absolument identiques permet l'exclusion des tentatives de copies. Les informations concernant le BAK ne sont pas enregistrées dans le dispositif de détection, mais, comme il est résiliable et jamais exactement identique, il peut être imprimé ou envoyé par SMS à l'utilisateur d'un téléphone mobile. La façon dont le message contenant le code alphanumérique est envoyé à l'utilisateur d'un téléphone mobile est faite de telle manière que le BAK peut être visible et lisible par l'utilisateur, mais peut également être chiffré dans les données utiles du message.

Par rapport à l'authentification basée sur des cartes ou des mots de passe, l'authentification biométrique, pour authentifier un utilisateur en se basant sur ses données biométriques, a l'avantage de ne pas être égarée, oubliée, ou volée. Ainsi, il est possible de fournir une authentification hautement disponible avec une résistance élevée à l'usurpation d'identité. Dans le système selon la présente invention, à la fin de la réception, on reçoit le message avec un BAK unique ou couplé avec le BAK du clerc administratif ou du travailleur de santé ou bien du prestataire. (Par exemple, les résultats de laboratoire peuvent ainsi être inclus par l'invention). La concaténation des différents BAKS des parties prenantes constitue le marquage BAK du message. Le marquage BAK d'un message est alors constitué par la combinaison de codes qui peuvent être calculés et sont uniques pour l'utilisateur, le patient et le prestataire de soins.

Les données des messages peuvent comprendre de simples rapports d'états de patients, et les commandes d'un fournisseur de santé ou l'une des informations de soins de santé nécessaires, à condition que le marquage BAK soit présent.

Dans les services de messages multimédia (MMS) pour lesquels la bande passante de transmission des données est limitée, le cryptage et la concaténation, ainsi que la compression et la décompression, peuvent être utilisés sans altérer les informations du BAK et le marquage du message de santé. Le récepteur mobile du travailleur de santé n'a pas besoin nécessairement de calculer l'étiquette du message, en tant que travailleur de santé, il a seulement à répondre, ou pas, au même message.

Les autres récepteurs, PDA, ordinateurs, etc. doivent être équipés pour calculer les données reçues et ordonner les messages selon l'étiquette BAK des messages afin d'ordonner les données du patient dans le dossier du patient, les données administratives et les données des travailleurs de santé qui ont été décidées.

L'opération d'anonymisation s'effectue sur la base d'un échange de codes issus de données biométriques, Les codes sont calculés par algorithmes basés sur la reconnaissance d'un ou plusieurs réseaux veineux par exemple ou par tout autre moyen biométrique. Le code est un résultat alphanumérique issu d'un calcul basé sur la localisation et les aspects caractéristiques de certaines parties du corps anatomique de la ou des personnes concernées par l'échange de données (les intervenants). Le code biométrique est calculé à chaque fois par un dispositif d'identification biométrique et transmis soit sous la forme d'un message court sur un récepteur désigné, soit imprimé, soit inscrit comme l'identifiant constitué dans un badge, par exemple. Ce sont les codes issus des données biométriques qui, après l'échange de données réalisé, permettent de reconstituer le fichier complet et les données des intervenants sans avoir à les nommer.

Pour renforcer la sécurité, le système selon la présente invention est conçu de telle sorte que l'échange de codes biométriques pour former l'étiquette des messages est fait de façon automatisée et cryptée. Avantageusement, le système selon la présente invention est conçu pour sécuriser une transmission bidirectionnelle de données, pour l'accès à un espace clos, en particulier à un véhicule automobile, consistant à établir un échange à distance de données entre un dispositif d'identification installé dans l'espace clos et un identifiant. Cet identifiant peut être constitué d'une séquence ordonnée en concaténant les codes biométriques des intervenants selon des algorithmes prédéterminés.

Le procédé comparatif, au niveau du dispositif de
contrôle du message court, peut ajouter la séquence de codes biométriques à l'information de contrôle du message. Ces informations peuvent ensuite éventuellement être envoyées à un personnel médical (par exemple à un contact d'un centre de surveillance) et / ou vers un serveur distant, via un dispositif de passerelle. Le dispositif de passerelle communique de préférence par SMS ou MMS.

La présente invention décrit un système et un procédé pour fournir un système simple et anonyme de marquage des messages. En effet, la présente invention permet un tel codage pour marquer, de préférence, les informations du SMS dans le domaine de l'information médicale sur un utilisateur, un patient, et / ou un professionnel de la santé en calculant d'abord un code à partir d'une valeur biométrique de l'utilisateur, le patient et le professionnel de la santé.

Les valeurs de marquage sont des valeurs qui sont générées par les caractéristiques biométriques d'une partie de l'empreinte vasculaire d'un utilisateur, d'un patient et d'un prestataire de soins. Le fichier de marquage est joint au message sortant, qui peut être adressé à un nœud de réseau associé, à une boîte aux lettres de messagerie unifiée de la partie appelée.

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

## Revendications

1. Système d'authentification biométrique résiliable non nominatif basé sur des réseaux veineux, comprenant
- une source de lumière, de préférence infrarouge, pour éclairer une partie du corps d'un utilisateur; et
- un dispositif de détection (1), comprenant
-- un capteur (2) pour capturer sans contact un réseau veineux de ladite partie du corps,
-- une unité d'extraction (3) de caractéristiques biométriques, et
-- une unité de conversion (4) de caractéristiques biométriques,
le dispositif de détection (1) disposant d'un identifiant unique;
- un premier serveur, comprenant une unité de génération de codes,
- un deuxième serveur connecté au premier serveur via un réseau sécurisé et comprenant
-- une unité de réception de code,
-- une base de données de codes (21), et
-- une unité de détermination de correspondance (23),
le deuxième serveur ne contenant aucune identité de l'utilisateur;
le dispositif de détection étant caractérisé en:
- l'unité d'extraction (3) de caractéristiques biométriques extrayant une quantité de caractéristiques à partir des informations biométriques obtenues par le capteur (2) et générant une empreinte vasculaire,
- l'unité de conversion (4) de caractéristiques biométriques étant apte à convertir ladite empreinte vasculaire, via un algorithme de codage, combinant l'identifiant unique du dispositif de détection (1) avec les caractéristiques extraites en un identifiant numérique variable, de sorte que ledit identifiant numérique variable n'est pas lié à ladite empreinte vasculaire de l'utilisateur, est généré sans aucune information nominative dudit utilisateur et est spécifique audit dispositif de détection;
le premier serveur étant caractérisé en:
- la réception de l'identifiant numérique variable,
- l'unité de génération de données (11) étant apte à générer des codes en utilisant un lieu, une date et des informations anonymes ou un paramètre logistique ou médical transmis par le dispositif de détection (1),
- l'encodage desdits codes avec l'identifiant numérique en un encodage final, qui est une suite alphanumérique, le résultat final de tous les codes, cryptés et concaténés ensembles, et
- la transmission dudit encodage final;
le deuxième serveur étant caractérisé en:
- la réception de l'encodage final par l'unité de réception de codes (22);
- l'unité de réception de codes (22) étant apte à convertir l'encodage final afin d'extraire et de générer un code unique correspondant à chaque zone saisie, et
- l'unité de détermination de correspondance (23) étant apte à comparer le code unique généré par l'unité de réception de codes (22) avec les codes contenus dans la base de donnée de codes (21) afin de déterminer une adéquation ou non;
- l'envoi d'une nouvelle information de codage, avec un algorithme différent, audit dispositif de détection (1) pour refaire la dernière saisie, au cas où le code extrait est inconnu mais présente des similitudes et des différences importantes avec un code existant dans la base de données (21).

2. Système d'authentification biométrique selon la revendication 1 **caractérisé en ce que** les codes générés par l'unité de génération de données (11) du premier serveur (10) sont inclus dans un service de messagerie multimédia, MMS, **en ce que** ledit MMS est sauvegardé sur un téléphone portable ou sur un ordinateur ou tablette, ledit ordinateur ou tablette étant branché au dispositif de détection (1), et **en ce que** ledit MMS est transmis, suivant un protocole standard, vers l'unité de réception (22) du second serveur (20).

3. Procédé d'authentification biométrique résiliable non nominatif basé sur des réseaux veineux, mis en oeuvre dans le système selon la rev. 1 à 2 comprenant les étapes suivantes:
- extraction par l'unité d'extraction (3) de caractéristiques biométriques d'une quantité de caractéristiques à partir d'informations biométriques obtenues par le capteur (2) et générant une empreinte vasculaire;
- conversion par l'unité de conversion (4) de caractéristiques biométriques de ladite empreinte vasculaire, via un algorithme de codage, combinant l'identifiant unique du dispositif de détection (1) avec les caractéristiques extraites en un identifiant numérique variable, de sorte que ledit identifiant numérique variable n'est pas lié à ladite empreinte vasculaire de l'utilisateur, est généré sans aucune information nominative dudit utilisateur et est spécifique audit dispositif de détection;
- réception par le premier serveur (10) de l'identifiant numérique variable;
- génération par l'unité de génération de données (11) de codes en utilisant un lieu, une date et des informations anonymes ou un paramètre logistique ou médical transmis par le dispositif de détection (1);
- encodage par le premier serveur desdits codes avec l'identifiant numérique en un encodage final, qui est une suite alphanumérique, le résultat final de tous les codes, cryptés et concaténés ensembles;
- transmission par le premier serveur dudit encodage final;
- réception de l'encodage final par l'unité de réception de codes (22);
- conversion par l'unité de réception de codes (22) de l'encodage final afin d'extraire et de générer un code unique correspondant à chaque zone saisie;
- comparaison par l'unité de détermination de correspondance (23) du code unique généré par l'unité de réception de codes (22) avec les codes contenus dans la base de donnée de codes (21) afin de déterminer une adéquation ou non;
- envoi par le deuxième serveur d'une nouvelle information de codage, avec un algorithme différent, audit dispositif de détection (1) pour refaire la dernière saisie, au cas où le code extrait est inconnu mais présente des similitudes et des différences importantes avec un code existant dans la base de données (21).

4. Procédé d'authentification selon la rev. 3 comprenant les étapes suivantes:
- inclusion des codes générés par l'unité de génération de données (11) du premier serveur (10) dans un service de messagerie multimédia, MMS ;
- sauvegarde dudit MMS sur un téléphone portable ou sur un ordinateur ou tablette, ledit ordinateur ou tablette étant branché au dispositif de détection (1) ; et
- transmission dudit MMS, suivant un protocole standard, vers l'unité de réception (22) du second serveur (20).

## Patentansprüche

1. Nicht namentlich kündbares biometrisches Authentifizierungssystem basierend auf venösen Netzen, bestehend aus
- eine Lichtquelle, vorzugsweise Infrarot, um einen Körperteil eines Benutzers zu beleuchten, und
- eine Detektionsvorrichtung (1), umfassend
-- einen Sensor (2) zum berührungslosen Erfassen eines Venennetzes des Körperteils,
-- eine Extraktionseinheit (3) biometrischer Merkmale, und
-- eine Umrechnungseinheit (4) der biometrischen Merkmale,
wobei die Detektionsvorrichtung (1) eine eindeutige Kennung aufweist,
- einen ersten Server, der eine Code-Erzeugungseinheit umfasst;
- einen zweiten Server, der über ein sicheres Netzwerk mit dem ersten Server verbunden ist und Folgendes umfasst:
-- eine Code-Empfangseinheit (22),
-- eine Codedatenbank (21), und
-- eine Entsprechungsbestimmungseinheit (23),
der zweite Server ohne Benutzeridentität,
wobei die Detektionsvorrichtung **gekennzeichnet ist durch**:
- die Extraktionseinheit für biometrische Merkmale (3) eine Menge von Merkmalen aus den vom Sensor (2) erhaltenen biometrischen Informationen extrahiert und einen Gefäßabdruck erzeugt,
- wobei die Umwandlungseinheit (4) der biometrischen Merkmale den Gefäßabdruck über einen Codieralgorithmus umwandeln kann, der die eindeutige Kennung der Erfassungsvorrichtung (1) mit den extrahierten Merkmalen in eine variable digitale Kennung kombiniert, so dass ein variabler digitaler Identifikator ist nicht mit dem Gefäßabdruck des Benutzers verknüpft, wird ohne irgendwelche Namensinformationen des Benutzers erzeugt und ist spezifisch für die Detektionsvorrichtung;
wobei der erste Server **gekennzeichnet ist durch**:
- Empfang der variablen digitalen Kennung,
- wobei die Datenerzeugungseinheit (11) in der Lage ist, Codes unter Verwendung eines anonymen Ortes, Datums und Informationen oder eines logistischen oder medizinischen Parameters zu generieren, die von der Detektionsvorrichtung (1) übertragen werden,
- die Codierung der Codes mit der digitalen Kennung in eine endgültige Codierung, die eine alphanumerische Sequenz ist, das Endergebnis aller Codes, verschlüsselt und miteinander verkettet, und
- Übertragung der endgültigen Codierung;
wobei der zweite Server **gekennzeichnet ist durch**:
- Empfang der endgültigen Codierung **durch** die Code-Empfangseinheit (22);
- wobei die Code-Empfangseinheit (22) in der Lage ist, die endgültige Codierung umzuwandeln, um einen eindeutigen Code entsprechend jeder eingegebenen Zone zu extrahieren und zu erzeugen, und
- wobei die Entsprechungsbestimmungseinheit (23) den von der Codeempfangseinheit (22) erzeugten eindeutigen Code mit den in der Codedatenbank (21) enthaltenen Codes vergleichen kann, um eine Angemessenheit oder kein zu bestimmen;
- Senden neuer Codierungsinformationen mit einem anderen Algorithmus an die Erkennungsvorrichtung (1), um den letzten Eintrag zu wiederholen, falls der extrahierte Code unbekannt ist, aber signifikante Ähnlichkeiten und Unterschiede mit einem bestehenden Code in der Datenbank (21) aufweist.

2. Biometrisches Authentifizierungssystem nach Anspruch 1, **dadurch gekennzeichnet, dass** die von der Datenerzeugungseinheit (11) des ersten Servers (10) erzeugten Codes in einen Multimedia-Messaging-Dienst, MMS, aufgenommen werden, indem die MMS auf einem Mobiltelefon gespeichert wird oder auf einem Computer oder Tablet, wobei der Computer oder das Tablet mit der Detektionsvorrichtung (1) verbunden ist, und dass die MMS gemäß einem Standardprotokoll an die Empfangseinheit (22) des zweiten Servers (20) übertragen wird.

3. Verfahren zur nicht-nominativ terminierbaren biometrischen Authentifizierung basierend auf venösen Netzen, implementiert in dem System nach Anspruch 1 bis 2, umfassend die folgenden Schritte:
- Extraktion biometrischer Merkmale einer Menge von Merkmalen aus biometrischen Informationen, die von dem Sensor (2) erhalten werden, durch die Extraktionseinheit (3) und Erzeugen eines Gefäßabdrucks;
- Umwandlung biometrischer Merkmale des vaskulären Fingerabdrucks durch die Umwandlungseinheit (4) über einen Codieralgorithmus, wobei die eindeutige Kennung der Erkennungsvorrichtung (1) mit den extrahierten Merkmalen in eine variable digitale Kennung kombiniert wird, so dass die variable digitale Kennung . ist nicht mit dem vaskulären Abdruck des Benutzers verknüpft ist, ohne irgendwelche Namensinformationen des Benutzers erzeugt wird und spezifisch für das Detektionsgerät ist;
- Empfang der variablen digitalen Kennung durch den ersten Server (10);
- Generieren von Codes durch die Datenerzeugungseinheit (11) unter Verwendung eines anonymen Ortes, Datums und Informationen oder eines logistischen oder medizinischen Parameters, der von der Detektionsvorrichtung (1) übertragen wird;
- Codieren der Codes mit der digitalen Kennung durch den ersten Server in eine endgültige Codierung, die eine alphanumerische Sequenz ist, das Endergebnis aller Codes, verschlüsselt und miteinander verkettet;
- Übertragung der endgültigen Codierung durch den ersten Server;
- Empfang der endgültigen Codierung durch die Code-Empfangseinheit (22);
- Umwandlung der endgültigen Codierung durch die Code-Empfangseinheit (22), um einen eindeutigen Code zu extrahieren und zu erzeugen, der jeder eingegebenen Zone entspricht;
- Vergleich des von der Codeempfangseinheit (22) erzeugten eindeutigen Codes mit den in der Codedatenbank (21) enthaltenen Codes durch die Entsprechungsbestimmungseinheit (23), um eine Übereinstimmung zu bestimmen oder nicht;
- Senden neuer Codierungsinformationen durch den zweiten Server mit einem anderen Algorithmus an die Detektionsvorrichtung (1), um den letzten Eintrag zu wiederholen, falls der extrahierte Code unbekannt ist, aber signifikante Ähnlichkeiten und Unterschiede mit einem Code aufweist, der in der Datenbank (21).

4. Authentifizierungsverfahren nach Anspruch 3 mit folgenden Schritten:
- Aufnahme von Codes, die von der Datenerzeugungseinheit (11) des ersten Servers (10) erzeugt wurden, in einen Multimedia-Nachrichtendienst, MMS;
- Speichern der MMS auf einem Mobiltelefon oder auf einem Computer oder Tablet, wobei der Computer oder das Tablet mit der Erkennungsvorrichtung (1) verbunden ist; und
- Übertragung der MMS gemäß einem Standardprotokoll an die Empfangseinheit (22) des zweiten Servers (20).

## Claims

1. A non-nominative, resilient biometric authentication system based on venous networks, comprising
- a light source, preferably infrared, to illuminate a part of the body of a user, and
- a detection device (1), comprising
- a sensor (2) for capturing without contact a venous network of said part of the body,
- an extraction unit (3) of biometric characteristics, and
- a conversion unit (4) of the biometric characteristics,
the detection device (1) having a unique identifier,
- a first server, comprising a code generation unit;
- a second server connected to the first server via a secure network and comprising
- a code reception unit (22),
- a code database (21), and
- a correspondence determination unit (23),
the second server containing no user identity,
the detection device being **characterized by**:
- the biometric characteristics extraction unit (3) extracting a quantity of characteristics from the biometric information obtained by the sensor (2) and generating a vascular imprint,
- the biometric characteristics conversion unit (4) being able to convert said vascular imprint, via a coding algorithm, combining the unique identifier of the detection device (1) with the extracted characteristics, into a variable digital identifier, from so that said variable digital identifier is not linked to said user's vascular imprint, is generated without any nominative information of said user and is specific to said detection device;
the first server being **characterized by**:
- receipt of the variable digital identifier,
- the data generation unit (11) being able to generate codes using an anonymous location, date and information or a logistical or medical parameter transmitted by the detection device (1),
- the encoding of said codes with the digital identifier into a final encoding, which is an alphanumeric sequence, the final result of all the codes, encrypted and concatenated together, and
- transmission of said final encoding;
the second server being **characterized by**:
- reception of the final encoding by the code reception unit (22);
- the code reception unit (22) being able to convert the final encoding in order to extract and generate a unique code corresponding to each entered zone, and
- the correspondence determination unit (23) being able to compare the unique code generated by the code reception unit (22) with the codes contained in the code database (21) in order to determine an adequacy or no ;
- sending new coding information, with a different algorithm to said detection device (1) to redo the last entry, in the event that the extracted code is unknown but has significant similarities and differences with an existing code in the database (21).

2. Biometric authentication system according to claim 1 **characterized in that** the codes generated by the data generation unit (11) of the first server (10) are included in a multimedia messaging service, MMS, **in that** said MMS is saved on a mobile phone or on a computer or tablet, said computer or tablet being connected to the detection device (1), and **in that** said MMS is transmitted, according to a standard protocol, to the reception unit (22) of the second server (20).

3. A method of non-nominative terminable biometric authentication based on venous networks, implemented in the system according to claim 1 to 2, comprising the following steps:
- extraction by the extraction unit (3) of biometric characteristics of a quantity of characteristics from biometric information obtained by the sensor (2) and generating a vascular imprint;
- conversion by the conversion unit (4) of biometric characteristics of said vascular fingerprint, via a coding algorithm, combining the unique identifier of the detection device (1) with the characteristics extracted into a variable digital identifier, so that said variable digital identifier is not linked to said user's vascular imprint, is generated without any nominative information of said user and is specific to said detection device;
- reception by the first server (10) of the variable digital identifier;
- generation by the data generation unit (11) of codes using an anonymous location, date and information or a logistical or medical parameter transmitted by the detection device (1);
- encoding by the first server of said codes with the digital identifier into a final encoding, which is an alphanumeric sequence, the final result of all the codes, encrypted and concatenated together;
- transmission by the first server of said final encoding;
- reception of the final encoding by the code reception unit (22);
- conversion by the code reception unit (22) of the final encoding in order to extract and generate a unique code corresponding to each entered zone;
- Comparison by the correspondence determination unit (23) of the unique code generated by the code reception unit (22) with the codes contained in the code database (21) in order to determine a match or not;
- sending by the second server of new coding information, with a different algorithm, to said detection device (1) to redo the last entry, in the event that the extracted code is unknown but has significant similarities and differences with a code existing in the database (21).

4. Authentication method according to claim 3 comprising the following steps:
- inclusion of codes generated by the data generation unit (11) of the first server (10) in a multimedia messaging service, MMS;
- saving said MMS on a mobile phone or on a computer or tablet, said computer or tablet being connected to the detection device (1); and
- transmission of said MMS, according to a standard protocol, to the reception unit (22) of the second server (20).
